(19) **Europäisches Patentamt / European Patent Office / Office européen des brevets**

(11) **EP 4 232 800 B1**

(12) **FASCICULE DE BREVET EUROPEEN**

(45) Date de publication et mention
de la délivrance du brevet:
**23.04.2025 Bulletin 2025/17**

(21) Numéro de dépôt: **21806309.7**

(22) Date de dépôt: **20.10.2021**

(51) Classification Internationale des Brevets (IPC):
**G01N 21/64** $^{(2006.01)}$ **G01N 21/66** $^{(2006.01)}$
**G01N 21/956** $^{(2006.01)}$ **H02S 50/15** $^{(2014.01)}$

(52) Classification Coopérative des Brevets (CPC):
**G01N 21/9505; H02S 50/15;** G01N 21/6489;
G01N 21/66; G01N 21/956; G01N 2021/646;
G01N 2021/8461; G01N 2201/0626;
G01N 2201/0631; G01N 2201/0634; Y02E 10/50

(86) Numéro de dépôt international:
**PCT/FR2021/051831**

(87) Numéro de publication internationale:
**WO 2022/084627 (28.04.2022 Gazette 2022/17)**

(54) **DISPOSITIF DE MESURE PAR PHOTOLUMINESCENCE ET TRANSMISSION**

VORRICHTUNG ZUR MESSUNG ÜBER PHOTOLUMINESZENZ UND TRANSMISSION

DEVICE FOR MEASURING VIA PHOTOLUMINESCENCE AND TRANSMISSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.10.2020 FR 2010774**

(43) Date de publication de la demande:
**30.08.2023 Bulletin 2023/35**

(73) Titulaire: **Commissariat à l'Energie Atomique et
aux Energies
Alternatives
75015 Paris (FR)**

(72) Inventeurs:
• **VARACHE, Renaud
38054 GRENOBLE CEDEX 09 (FR)**
• **DAHAN, Patrick, Jeremy
75015 PARIS 15 (FR)**

(74) Mandataire: **Brevalex
Tour Trinity
1 B Place de la Défense
92400 Courbevoie (FR)**

(56) Documents cités:
WO-A1-2019/117228     US-A1- 2006 029 284
US-B1- 8 269 830

• **SONG MEI-PING ET AL: "Research On Broken
Corner And Black Edge Detection Of Solar Cell",
2018 INTERNATIONAL CONFERENCE ON
MACHINE LEARNING AND CYBERNETICS
(ICMLC), IEEE, vol. 1, 15 July 2018 (2018-07-15),
pages 80 - 84, XP033443648, DOI: 10.1109/
ICMLC.2018.8526960**
• **WILLIAMS D J ET AL: "Normalized edge
detector", PROCEEDINGS OF THE
INTERNATIONAL CONFERENCE ON PATTERN
RECOGNITION. ATLANTIC CITY, JUNE 16 - 21,
1990. CONFERENCE A : COMPUTER VISION
AND CONFERENCE B : PATTERN RECOGNITION
SYSTEMS AND APPLICATIONS; [PROCEEDINGS
OF THE INTERNATIONAL CONFERENCE ON
PAT, vol. i, 16 June 1990 (1990-06-16), pages 942 -
946, XP010020337, ISBN: 978-0-8186-2062-1,
DOI: 10.1109/ICPR.1990.118245**

EP 4 232 800 B1

• **SHI BAO-SHAN ET AL: "A Method for Threshold Selection in Edge Width Detection of Objects in the Image", 2009 INTERNATIONAL CONFERENCE ON SIGNAL PROCESSING SYSTEMS, IEEE, PISCATAWAY, NJ, USA, 15 May 2009 (2009-05-15), pages 402 - 405, XP031491234, ISBN: 978-0-7695-3654-5**

**Description**

**DOMAINE TECHNIQUE**

La présente invention se rapporte au domaine de la caractérisation, et plus particulièrement à la caractérisation par mesure de photoluminescence ou par électroluminescence.

L'invention concerne notamment un dispositif de mesure par photoluminescence destiné à améliorer la détection, ainsi que la caractérisation, des bords des échantillons mesurés par ledit dispositif.

Le dispositif selon la présente invention est, à cet égard, avantageusement mis en œuvre pour la caractérisation des bords de cellule photovoltaïques formées sur ou dans des substrats de silicium.

**ÉTAT DE LA TECHNIQUE ANTÉRIEURE**

Les mesures par photoluminescence ou électroluminescence sont des techniques de choix pour sonder les propriétés électroniques et/ou optiques des matériaux, et notamment les matériaux semi-conducteurs.

En pratique, les mesures par photoluminescence mettent en œuvre l'excitation d'un matériau par une source de rayonnement lumineux de manière à promouvoir la transition d'électrons dudit matériau de leur niveau d'énergie fondamental (aussi appelé « état d'équilibre ») vers des niveaux d'énergies supérieures. La source de rayonnement lumineux peut, par exemple, être un rayonnement laser ou le rayonnement d'une diode électroluminescente.

Les électrons ainsi promus retournent dans leur état d'équilibre selon des chemins de recombinaisons radiatives ou non-radiatives dépendamment de la qualité du matériau sondé. A cet égard, l'homme du métier trouvera dans le document [1], cité à la fin de la description, une étude des modes de recombinaisons radiatives et non-radiatives intervenant lors d'une mesure par photoluminescence.

En particulier, les recombinaisons non-radiatives, généralement associées à la présence de défauts ou à des phénomènes de type Auger, se produisent au détriment des recombinaisons radiatives.

Le taux de recombinaisons radiatives, dont le niveau ou l'intensité mesurée dans le temps représente le signal de photoluminescence, permet de caractériser la qualité du matériau sondé. En particulier, les mesures par photoluminescence permettent de détecter et/ou de localiser des défauts susceptibles d'être présents dans le matériau sondé.

Selon une technique particulière de photoluminescence résolue spatialement développée par Trupke et al., et décrite dans le document [2] cité la fin de la description, il est également possible d'établir une cartographie de photoluminescence de l'échantillon sondé et notamment repérer les défauts dudit échantillon.

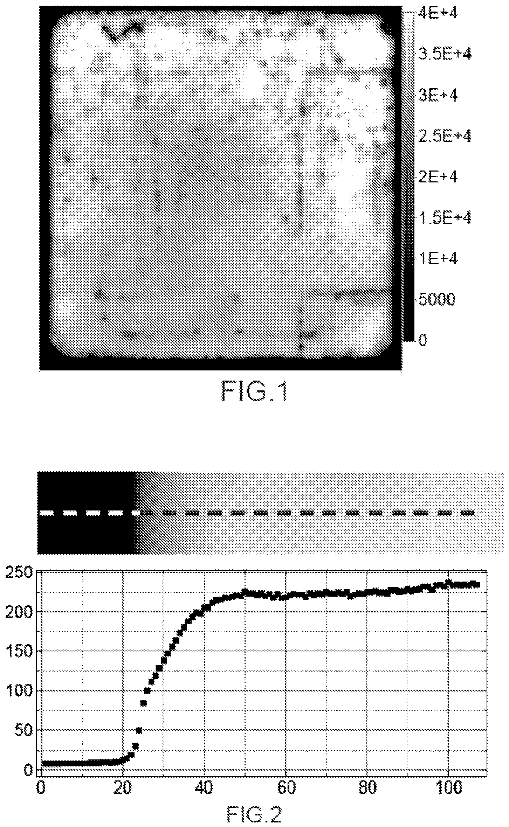

A cet égard, la figure 1 représente une cartographie de photoluminescence, en niveaux de gris, d'un échantillon de silicium reposant sur un socle et comprenant une surface passivée avec du silicium amorphe.

Les zones les plus claires sont le siège d'un taux de recombinaisons radiatives plus fort que les zones sombres. Inversement les zones sombres sont le siège d'un taux de recombinaisons non-radiatives plus fort que les zones claires. Les zones claires sont donc des zones caractéristiques d'une faible densité de défauts et les zones sombres sont révélatrices d'une densité de défauts importante.

Parmi les zones sombres, la section périphérique ou bord de l'échantillon attire particulièrement l'attention.

En effet, les procédés de fabrication de tels échantillons, notamment des cellules photovoltaïques, impliquent des étapes particulièrement agressives qui peuvent chacune contribuer à la dégradation des bords desdits échantillons qui, à terme, concentrent une densité de défauts importante.

De cette concentration de défauts importante résulte un très faible niveau de photoluminescence et donc une impossibilité de distinguer le bord de l'échantillon du socle sur lequel ce dernier repose. En d'autres termes, le contraste de l'intensité de photoluminescence entre le bord de l'échantillon et le socle est insuffisant pour repérer ledit bord (figure 2).

Le document [3] cité à la fin de la description propose à cet égard une méthode permettant de mieux distinguer le bord de l'échantillon. Cette méthode impose notamment la mise en œuvre d'un socle susceptible d'émettre un signal de photoluminescence afin d'améliorer le contraste au niveau du bord de l'échantillon lors d'une mesure de photoluminescence.

Toutefois, le socle peut également présenter des défauts, notamment à proximité du bord de l'échantillon, et par voie de conséquence limiter l'amélioration de contraste recherchée.

En outre, cette méthode peut nécessiter de sélectionner un socle qui présente un niveau de photoluminescence approprié.

Ce document [3] propose également de mettre en œuvre une charge de type Corona sur une face arrière du socle.

Cette méthode reste néanmoins compliquée à mettre en œuvre. Le document [4] propose d'utiliser un rail de support permettant d'imager des batteries solaires en transmission alors que le document [5] utilise un support transparent pour caractériser un échantillon de type PCB.

Un but de la présente invention est alors de proposer un dispositif de mesure par photoluminescence permettant de mieux distinguer les bords d'échantillon et plus simple à mettre en œuvre que les méthodes proposées dans le document [3].

**EXPOSÉ DE L'INVENTION**

Le but de l'invention est atteint par un dispositif de mesure par photoluminescence ou par électroluminescence comme défini dans la revendication 1.

Selon un mode de mise en œuvre, l'au moins une source de rayonnement comprend une pluralité de sources de rayonnement agencées de manière matricielle sur la face principale.

Selon un mode de mise en œuvre, ledit dispositif comprend en outre un diffuseur intercalé entre le porte-échantillon et le support, et configuré pour homogénéiser le rayonnement lumineux susceptible d'être émis par les sources de rayonnement.

Selon un mode de mise en œuvre, le porte-échantillon, le diffuseur et le support sont maintenu solidaires les uns des autres par des moyens de maintien.

Selon un mode de mise en œuvre, ledit dispositif comprend au moins un filtre configuré pour filtrer en longueur d'onde le rayonnement lumineux susceptible d'être émis par les sources de rayonnement.

Ainsi, lorsqu'un échantillon de contour C repose par une première face sur la face avant du porte-échantillon, et de sorte que ledit échantillon soit circonscrit par une zone de débordement du porte-échantillon susceptible d'être traversée par un rayonnement lumineux susceptible d'être émis par l'au moins une source de rayonnement, ledit détecteur est configuré pour établir une cartographie de l'intensité lumineuse du rayonnement susceptible de traverser la zone de débordement et du signal de photoluminescence émis par l'échantillon.

Selon un mode de mise en œuvre, l'unité de traitement comprend un programme d'ordinateur conçu pour mettre en œuvre les étapes suivantes :

a) une étape d'extraction d'un profil d'intensité lumineuse selon une trace linéaire chevauchant le contour de l'échantillon, ledit profil comprenant une première section associée à l'intensité du rayonnement lumineux traversant la zone de débordement, et une deuxième section associée à l'intensité de la photoluminescence de l'électroluminescence émise par l'échantillon ;

b) une étape de détermination de la position $x_0$, associée à une intensité $y_0$ du signal, et repérée à partir d'une position de référence de la première section, du contour sur le profil d'intensité lumineuse, ladite étape de localisation comprenant un calcul de pente, la position $x_0$ correspondant à une position pour laquelle une rupture de pente supérieure en valeur absolue à une valeur prédéterminée est observée dans un sens allant de la première section vers la deuxième section, ladite valeur prédéterminée étant avantageusement supérieure à 10 %.

Selon un mode de mise en œuvre, le programme d'ordinateur est également conçu pour mettre en œuvre les étapes suivantes :

c) une étape de détermination d'une intensité de référence $y_{max}$ dans la deuxième section S2, ladite intensité de référence $y_{max}$ correspondant à un maximum glissant ;

d) une étape de détermination d'une première étendu $E_1$ selon une méthode dite de la tangente, ladite méthode de la tangente comprend les sous étapes suivantes :

d1) le calcul de la pente $P_0$ d'une droite $D_0$ passant par le point de coordonnées $x_0$ et $y_0$ et par un autre point du bord de l'échantillon pris sur la trace linéaire ;

d2) le calcul d'une position, dite position cible $x_c$, pour laquelle la droite $D_0$ présente une ordonnée égale à 70% de l'écart entre l'intensité de référence $y_{max}$ et l'intensité $y_0$ ;

d3) le calcul d'un écart entre la position cible $x_c$ et la position $x_0$, ledit écart étant associé à la première étendue $E_1$ ;

e) une étape de détermination d'une deuxième étendu $E_2$ selon une méthode dite directe, ladite méthode directe comprend les sous étapes suivantes :

e1) la détermination d'une position, dite position directe $x_d$, pour laquelle l'intensité, dans la deuxième section S2, est égale à 70% de l'écart entre l'intensité de référence $y_{max}$ et l'intensité $y_0$,

e2) le calcul d'un écart entre la position directe $x_d$ et la position $x_0$, ledit écart étant associé à la deuxième étendue $E_2$.

f) le calcul d'une largeur D du bord alors définie comme la valeur minimale entre la première étendue $E_1$ et la deuxième étendue $E_2$.

Le maximum glissant, déterminé à l'étape c), est glissant en dehors de la courbe, sur la zone adjacente à la trace linéaire.

Selon un mode de mise en œuvre, le programme d'ordinateur est également conçu pour calculer un métrique M représentatif de la quantité de défaut présents en bord de plaques, le Métrique M répond à la relation suivante :

[Math 1]

$$M = \int_{x_0}^{D} \frac{y_{max} - y(x)}{y_{max}} dx$$

Où y(x) représente la variation du profil d'intensité selon la trace linéaire en fonction de sa position x.

Selon un mode de mise en œuvre, ledit dispositif comprend en outre une source d'émission lumineuse (120) destinée à induire l'émission d'un signal de photoluminescence par un échantillon (200) susceptible de reposer sur la face avant (111) du porte-échantillon (110).

Selon un mode de mise en œuvre, le détecteur (130) configuré pour collecter le signal de photoluminescence.

## BRÈVE DESCRIPTION DES DESSINS

D'autres caractéristiques et avantages apparaîtront dans la description qui va suivre d'un dispositif de mesure par photoluminescence selon l'invention, donnés à titre d'exemples non limitatifs, en référence aux dessins annexés dans lesquels :

[Fig. 1] est une cartographie de la photoluminescence d'un échantillon de silicium reposant sur un porte-échantillon mesurée selon une méthode connue de l'état de la technique, l'intensité de la photoluminescence est donnée selon une échelle de niveaux de gris attachée à la figure ;

[Fig. 2] est une représentation graphique d'un profil de mesure de l'intensité de photoluminescence (selon l'axe vertical en unité arbitraire) en fonction d'une position selon un segment (selon l'axe vertical en unité arbitraire) traversant le bord de l'échantillon, le segment figurant également en traits interrompus sur une section de cartographie extraite de la figure 1 et attachée à ladite représentation graphique ;

[Fig. 3] est une représentation schématique du dispositif de mesure par photoluminescence selon la présente invention ;

[Fig. 4] est une photographie d'un support sur lequel sont agencées de manière matricielle des diodes électroluminescentes ;

[Fig. 5] est une représentation schématique de la mise en œuvre du dispositif de la figure 3 pour la mesure par photoluminescence d'un échantillon ;

[Fig. 6] est un exemple de cartographie susceptible d'être obtenue à l'issue d'une caractérisation par photoluminescence d'un échantillon reposant sur le porte-échantillon du dispositif de la figure 3 ;

[Fig. 7a]

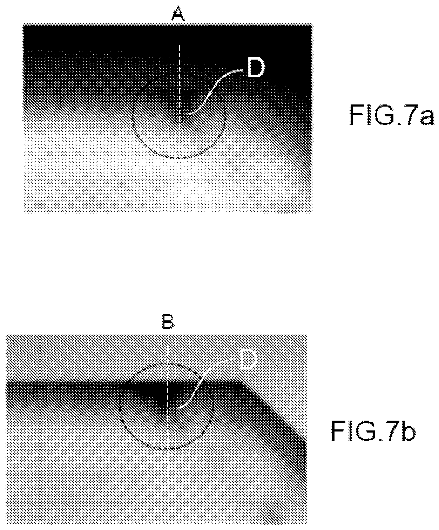

[Fig. 7b] sont des cartographies du signal collecté par le détecteur avec les diodes électroluminescentes, respectivement, éteintes et allumées ;

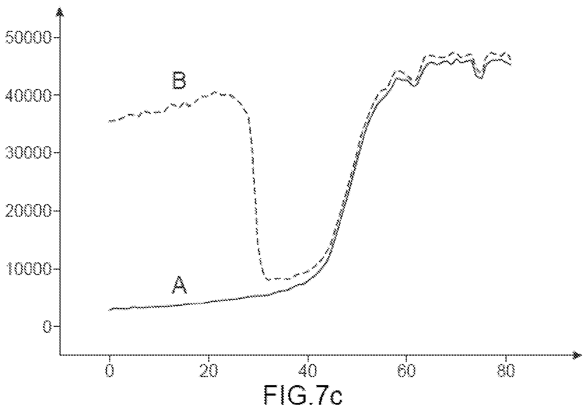

[Fig. 7c] est une représentation graphique de profils d'intensité collectés par le détecteur selon les traces « A » et « B », respectivement, de la figure 7a et de la figure 7b ;

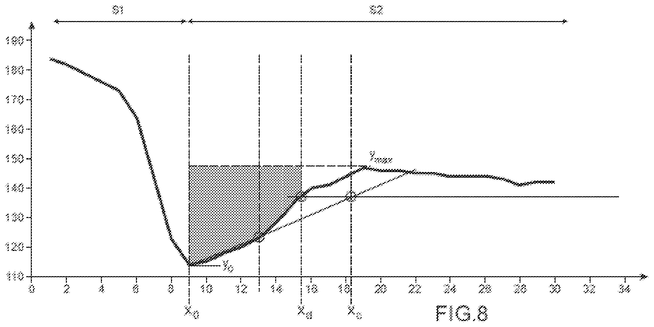

[Fig. 8] est une représentation graphique de la mise en œuvre du programme d'ordinateur selon la présente invention.

## EXPOSÉ DÉTAILLÉ DE MODES DE RÉALISATION PARTICULIERS

La présente invention concerne un dispositif de mesure par photoluminescence ou par électroluminescence pourvu d'un porte-échantillon sur une face duquel, dite face avant, un échantillon est susceptible de reposer.

Le dispositif comprend par ailleurs une source d'émission lumineuse, par exemple un LASER, et un détecteur. La source d'émission lumineuse est notamment destinée à induire l'émission d'un signal de photoluminescence par l'échantillon, tandis que le détecteur est agencé pour collecter ledit signal de photoluminescence.

Le dispositif selon la présente invention comprend au moins une diode électroluminescente configurée pour émettre un rayonnement lumineux illuminant la face arrière du porte-échantillon. Ce rayonnement est notamment adapté pour traverser, par transparence, le porte-échantillon.

Ainsi, lors d'une mesure de photoluminescence, le détecteur collecte, d'une part, le signal de photoluminescence émis par l'échantillon, et d'autre part, le rayonnement lumineux traversant le porte-échantillon au niveau d'une zone de débordement dans laquelle l'échantillon est circonscrit.

La suite de l'énoncé se limite à la description d'un dispositif adapté pour la mesure par photoluminescence. Toutefois, l'homme du métier, à la seule lecture de la suite de l'énoncé et de ses connaissances générales dans le domaine des mesure par électroluminescente, pourra généraliser les concepts exposés aux dispositifs de mesure par électroluminescence. A cet égard, il pourra prévoir des contacts électriques sur une face d'un échantillon destiné à être mesure par électroluminescence.

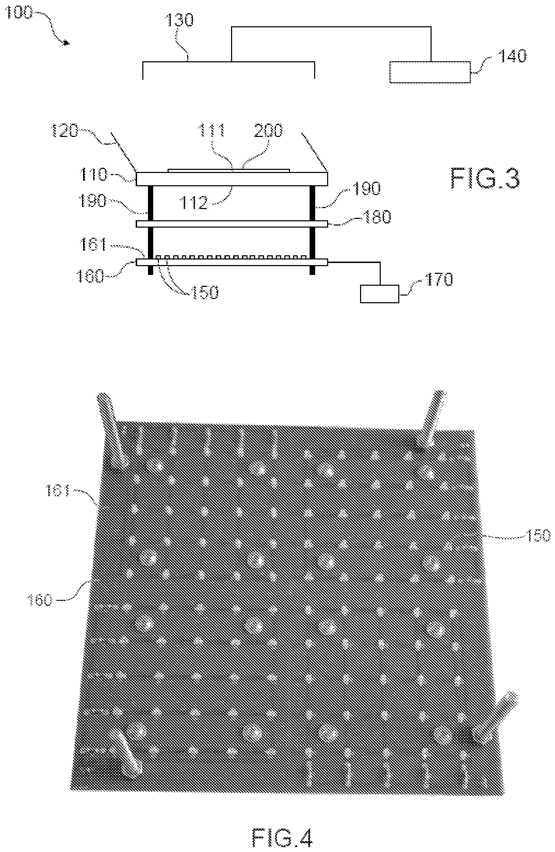

La figure 3 est une représentation schématique d'un dispositif 100 de mesure par photoluminescence selon la présente invention.

Le dispositif 100 comprend notamment un porte-échantillon 110 de forme généralement plane. Le porte-échantillon 110 comprend notamment deux faces parallèles entre elles dites, respectivement, face avant 111 et face arrière 112.

Le dispositif 100 comprend également une source d'émission lumineuse 120 destinée à induire un signal de photoluminescence d'un échantillon 200 reposant sur la face avant 111 du porte-échantillon 110. La source d'émission lumineuse peut à cet égard comprendre un laser.

Le dispositif 100 comprend en outre un détecteur 130. Le détecteur 130 est plus particulièrement agencé pour collecter un signal de photoluminescence émis par l'échantillon 200 sous l'action d'une excitation par la source d'émission lumineuse 120. Le détecteur forme avantageusement une matrice de capteur, notamment des capteurs photosensibles.

Le détecteur 130 est par ailleurs associé à une unité de traitement 140 configurée pour traiter le signal collecté par le détecteur 130.

L'unité de traitement peut comprendre un calculateur, notamment un processeur, sur lequel est chargé un logiciel ou programme d'ordinateur configuré pour exécuter des étapes aboutissant au traitement des données collectées par le détecteur 130.

Le dispositif 100 comprend en outre une ou plusieurs sources de rayonnement 150 agencées pour émettre un rayonnement lumineux illuminant la face arrière 112 du porte-échantillon 100 (figure 3).

Plus particulièrement, l'une ou plusieurs diodes 150 peut notamment reposer sur une face principale 161 d'un support 160. Le support 160 peut à cet égard comprendre un agencement de pistes métalliques, en particulier sous forme de circuit imprimé, destinées à assurer la connexion des sources de rayonnement 150 avec un générateur 170. De manière avantageuse, le générateur 170 est configuré pour ajuster l'intensité du rayonnement lumineux susceptible d'être émis par l'une ou plusieurs sources de rayonnement 150. Le générateur peut également être configuré pour alimenter les sources de rayonnement uniquement lorsque la source d'émission lumineuse 120 émet effectivement un rayonnement lumineux.

L'au moins une diode électroluminescente 150 comprend avantageusement une pluralité de sources de rayonnement 150 agencées de manière matricielle (figure 4).

Par « agencées de manière matricielle », il est entendu un maillage à N lignes et M colonnes. Chaque diode électroluminescente 150 est alors disposée à l'intersection d'une ligne avec une colonne du maillage.

Par ailleurs, le porte-échantillon 110 est fait d'un matériau transparent au regard du rayonnement émis par les sources de rayonnement 150.

En particulier, le porte-échantillon 110 peut comprendre une plaque acrylique, du verre dépoli ou encore un matériau polymère. A cet égard, les sources de rayonnement 150 peuvent être configurées pour émettre un rayonnement lumineux d'une longueur d'onde inférieure à 1000 nm. Par exemple, les sources de rayonnement 150 peuvent être configurées pour émettre un rayonnement lumineux à 940 nm. A cet égard, les sources de rayonnement 150 peuvent comprendre, des lasers, des sources halogène, ou encore des diodes émettant, par exemple, un rayonnement d'une longueur d'onde de 940 nm de la société Kingbright.

Selon cette configuration, le rayonnement lumineux susceptible d'être émis par les sources de rayonnement 150 peut être collecté par le détecteur 130.

Le dispositif 100 peut également comprendre un diffuseur 180 intercalé entre le porte-échantillon 110 et le support 160, et configuré pour homogénéiser le rayonnement lumineux susceptible d'être émis par les sources de rayonnement.

Le diffuseur 180 peut comprendre au moins un des matériaux choisis parmi : plaque acrylique, du verre dépoli ou encore un matériau polymère.

Par ailleurs, le porte-échantillon 110, le diffuseur 180 et le support 160 sont avantageusement maintenus solidaires les uns des autres par des moyens de maintien. Les moyens de maintien peuvent à cet égard comprendre des tirants 190.

Toujours de manière avantageuse, le dispositif 100 peut comprendre au moins un filtre configuré pour filtrer en longueur d'onde le rayonnement lumineux susceptible d'être émis par les sources de rayonnement. La mise en œuvre d'un ou plusieurs filtres permet notamment de limiter la saturation du détecteur 130 par le rayonnement lumineux émis par les sources de rayonnement.

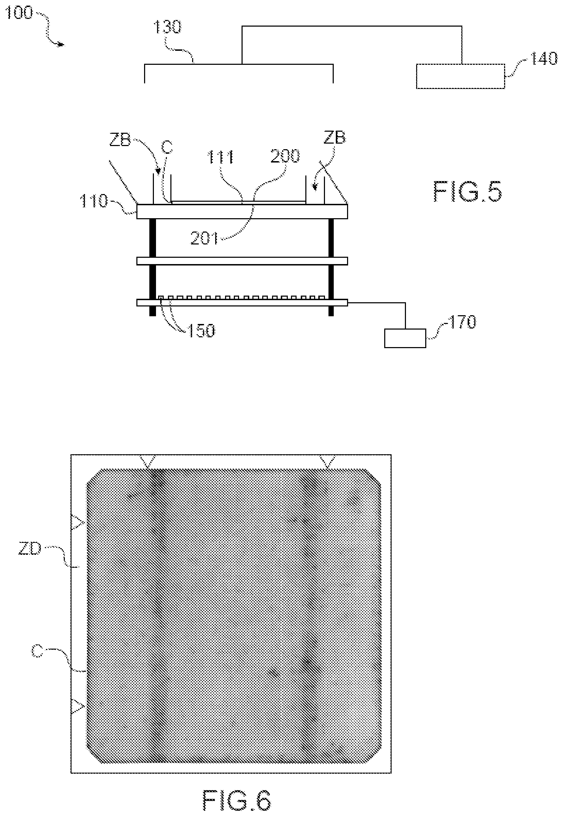

La figure 5 est une illustration de la mise en œuvre du dispositif 100 de mesure par photoluminescence selon la présente invention. L'échantillon 200 destiné à être caractérisé est alors disposé sur la face avant 111 du porte-échantillon 110.

Cet échantillon 200 comprend notamment un contour C et repose par une première face 201 sur la face avant 111 du porte-échantillon 110. L'échantillon 200 est notamment positionné sur la face avant 111 de manière à être circonscrit par une zone de débordement ZB du porte-échantillon 110 susceptible d'être traversée par un rayonnement lumineux émis par l'au moins une diode électroluminescente 150. Ainsi, le détecteur 130 collecte d'une part le signal de photoluminescence émis par l'échantillon 200 et d'autre part le signal associé au rayonnement lumineux émis par les sources de rayonnement et traversant le porte-échantillon 110 au niveau de la zone de débordement. L'unité de traitement permet d'établir la cartographie de l'intensité du signal collecté par le détecteur 130, ce signal comportant d'une part le signal de photoluminescence émis par l'échantillon 200 et d'autre part le signal associé au rayonnement traversant la zone de débordement ZB.

La figure 6 représente une cartographie de l'intensité du signal collecté par le détecteur 130 lors de cette mesure. Cette cartographie laisse apparaître deux régions. Plus particulièrement, on peut observer sur cette cartographie une région grise, dite première région, délimitée par un contour sombre et associée au signal de photoluminescence émis par l'échantillon. L'autre région, dite deuxième région, très claire, est associée au rayonnement lumineux traversant la zone de débordement. La délimitation, et plus particulièrement le contraste, très nette entre ces deux régions est une conséquence de la mise en œuvre des sources de rayonnement.

A cet égard, la figure 7a et la figure 7b sont des cartographies du signal collecté par le détecteur avec les sources de rayonnement, respectivement, éteintes et allumées. L'examen de ces deux cartographies permet d'illustrer clairement l'amélioration du contraste dès lors que les sources de rayonnement 150 sont allumées. Cette amélioration est d'autant plus notable lorsqu'un défaut D est à proximité du bord de l'échantillon. Les profils d'intensité de signal « A » et « B » sont représentés graphiquement à la figure 7c. Le profil « A », obtenu lorsque les diodes sont éteintes, ne permet pas de repérer précisément le bord de l'échantillon. Le profil « B », pour sa part, permet non seulement de repérer précisément le bord de l'échantillon mais également d'extraire l'étendue du défaut D.

Le dispositif 100 selon la présente invention comprend également un programme d'ordinateur chargé sur l'unité de traitement 140.

Notamment le programme d'ordinateur est conçu pour mettre en œuvre les étapes suivantes :

a) une étape d'extraction d'un profil d'intensité lumineuse selon une trace linéaire chevauchant le contour C de l'échantillon 200, ledit profil comprenant une première section S1 associée à l'intensité du rayonnement lumineux traversant la zone de débordement ZD, et une deuxième section S2 associée à l'intensité de la photoluminescence de l'échantillon 200 ;

b) une étape de détermination de la position $x_0$, associée à une intensité $y_0$, repérée à partir d'une position de référence de la première section S1, du contour C sur le profil d'intensité lumineuse. Cette étape de localisation comprend un calcul de pente. Plus particulièrement, la position $x_0$ correspond à une position pour laquelle une rupture de pente supérieure, en valeur absolue, à une valeur prédéterminée est observée dans un sens allant de la première section S1 vers la deuxième section S2. La valeur prédéterminée est avantageusement supérieure à 10 %.

Le programme d'ordinateur peut également être conçu pour mettre en œuvre des étapes qui conduisent à la détermination de la largeur du bord de l'échantillon. En particulier, le programme d'ordinateur peut comprendre les étapes suivantes :

c) une étape de détermination d'une intensité de référence $y_{max}$ dans la deuxième section S2, ladite correspondant à un maximum glissant sur une fenêtre encadrant la zone en cours d'étude.

d) une étape de détermination d'une première étendu $E_1$ selon une méthode dite de la tangente.

Ladite méthode de la tangente comprend les sous étapes suivantes :

d1) le calcul de la pente $P_0$ d'une droite $D_0$ passant par le point de coordonnées $x_0$ et $y_0$ et par un autre point du bord de l'échantillon pris sur la trace linéaire, l'autre point du bord peut par exemple être espacé de 3 à 8 pixels du point x0 (chaque pixel étant un site de détection du détecteur).

d2) le calcul d'une position, dite position cible $x_c$, pour laquelle la droite $D_0$ présente une ordonnée égale à 70% de l'écart entre l'intensité de référence $y_{max}$ et l'intensité $y_0$,

d3) le calcul d'un écart entre la position cible $x_c$ et la position $x_0$, ledit écart étant associé à la première étendue $E_1$,

e) une étape de détermination d'une deuxième étendu $E_2$ selon une méthode dite directe. Ladite méthode directe comprend les sous étapes suivantes :

e1) la détermination d'une position, dite position directe $x_d$, pour laquelle l'intensité, dans la deuxième section S2, est égale à 70% de l'écart entre l'intensité de référence $y_{max}$ et l'intensité $y_0$,

e2) le calcul d'un écart entre la position directe $x_d$ et la position $x_0$, ledit écart étant associé à la deuxième étendue $E_2$.

La largeur du bord D est alors définie comme la valeur minimale entre la première étendue $E_1$ et la deuxième étendue $E_2$.

La programme d'ordinateur est conçu pour calculer un métrique M représentatif de la quantité de défaut présents en bord de plaques.

Le métrique M répond à cet égard à la relation suivante :

[Math 2]

$$M = \int_{x_0}^{D} \frac{y_{max} - y(x)}{y_{max}} dx$$

Où $y(x)$ représente la variation du profil d'intensité selon la trace linéaire en fonction de sa position x.

L'invention est ainsi avantageusement mise en œuvre pour la caractérisation de cellules photovoltaïques à base de Silicium.

Cette caractérisation peut notamment permettre d'optimiser les étapes de découpe de cellule, et ainsi amélioré la qualité des bords desdites cellules.

## REFERENCES

[1] P. Würfel, S. Finkbeiner, and E. Daub, "Generalized Planck's radiation law for luminescence via indirect transitions", Appl. Phys. A Mater. Sci. Process., vol. 60, no. 1, pp. 67-70, Jan. 1995,

[2] T. Trupke, R. A. Bardos, M. C. Schubert, and W. Warta, "Photoluminescence imaging of silicon wafers", Appl. Phys. Lett., vol. 89, no. 4, p. 44107, Jul. 2006,

[3] FR 3073944.

[4] WO 2019/117228 A1.

[5] US 8 269 830 B1.

## Revendications

1. Dispositif (100) de mesure par photoluminescence ou par électroluminescence qui comprend :

   - un porte-échantillon (110) ;
   - un détecteur (130) configuré pour collecter un signal de photoluminescence ou d'électroluminescence émis par un échantillon (200) susceptible d'être disposé sur une face avant (110) du porte-échantillon (110) ;
   - une unité de traitement (140) configurée pour traiter un signal collecté par le détecteur (130) ;
   le dispositif comprenant en outre un support (160) disposé en regard d'une face arrière (112) du porte-échantillon (110), opposée à la face avant (110), et sur une face duquel, dite face principale (161), repose au moins une source de rayonnement (150) destinée à émettre un rayonnement lumineux illuminant la face arrière (112) et susceptible d'être collecté, par transparence du porte-échantillon (110) au regard dudit rayonnement lumineux, par le détecteur (130),
   **caractérisé en ce que**, lorsqu'un échantillon (200) de contour C repose par une première face sur la face avant (110) du porte-échantillon (110), et de sorte que ledit échantillon (200) soit circonscrit par une zone de débordement du porte-échantillon (110) susceptible d'être traversée par un rayonnement lumineux susceptible d'être émis par l'au moins une source de rayonnement (150), ledit détecteur (130) est également configuré pour établir une cartographie de l'intensité lumineuse du rayonnement susceptible de traverser la zone de débordement et du signal de photoluminescence émis par l'échantillon (200).

2. Dispositif selon la revendication 1, dans lequel l'au moins une source de rayonnement (150) comprend une pluralité de sources de rayonnement agencées de manière matricielle sur la face principale.

3. Dispositif selon la revendication 2, dans lequel ledit dispositif comprend en outre un diffuseur (180) intercalé entre le porte-échantillon (110) et le support, et configuré pour homogénéiser le rayonnement lumineux susceptible d'être émis par les sources de rayonnement.

4. Dispositif selon la revendication 3, dans lequel le porte-échantillon (110), le diffuseur (180) et le support sont maintenu solidaires les uns des autres par des moyens de maintien.

5. Dispositif selon la revendication 3 ou 4, dans lequel ledit dispositif comprend au moins un filtre configuré pour filtrer en longueur d'onde le rayonnement lumineux susceptible d'être émis par les sources de rayonnement.

6. Dispositif selon l'une des revendications 1 à 5, dans lequel l'unité de traitement (140) comprend un programme d'ordinateur conçu pour mettre en œuvre les étapes suivantes :

   a) une étape d'extraction d'un profil d'intensité lumineuse selon une trace linéaire chevauchant le contour de l'échantillon (200), ledit profil comprenant une première section associée à l'intensité du rayonnement lumineux traversant la zone de débordement, et une deuxième section associée à l'intensité de la photoluminescence de l'électroluminescence émise par l'échantillon (200) ;
   b) une étape de détermination de la position $x_0$, associée à une intensité $y_0$ du signal, et repérée à partir d'une position de référence de la première section, du contour sur le profil d'intensité lumineuse, ladite étape de localisation comprenant un calcul de pente, la position $x_0$ correspondant à une position pour laquelle une rupture de pente supérieure en valeur absolue à une valeur prédéterminée est observée dans un sens allant de la première section vers la deuxième section, ladite valeur prédéterminée étant avantageusement supérieure à 10 %.

7. Dispositif selon la revendication 6, dans lequel le programme d'ordinateur est également conçu pour mettre en œuvre les étapes suivantes :

   c) une étape de détermination d'une intensité de référence $y_{max}$ dans la deuxième section S2, ladite intensité de référence $y_{max}$ correspondant à un maximum glissant ;
   d) une étape de détermination d'une première étendu $E_1$ selon une méthode dite de la tangente, ladite méthode de la tangente comprend les sous étapes suivantes :

      d1) le calcul de la pente $P_0$ d'une droite $D_0$ passant par le point de coordonnées $x_0$ et $y_0$ et par un autre point du bord de l'échantillon (200) pris sur la trace linéaire ;
      d2) le calcul d'une position, dite position cible $x_c$, pour laquelle la droite $D_0$ présente une ordonnée égale à 70% de l'écart entre l'intensité de référence $y_{max}$ et l'intensité $y_0$ ;
      d3) le calcul d'un écart entre la position cible $x_c$ et la position $x_0$, ledit écart étant associé à la première étendue $E_1$ ;

   e) une étape de détermination d'une deuxième étendu $E_2$ selon une méthode dite directe, ladite méthode directe comprend les sous étapes suivantes :

      e1) la détermination d'une position, dite position directe $x_d$, pour laquelle l'intensité, dans la deuxième section S2, est égale à 70% de l'écart entre l'intensité de référence $y_{max}$ et l'intensité $y_0$,
      e2) le calcul d'un écart entre la position directe $x_d$ et la position $x_0$, ledit écart étant associé à la deuxième étendue $E_2$.

   f) le calcul d'une largeur D du bord alors définie comme la valeur minimale entre la première étendue $E_1$ et la deuxième étendue $E_2$.

8. Dispositif selon la revendication 7, dans lequel le programme d'ordinateur est également conçu pour calculer un métrique M représentatif de la quantité de défaut présents en bord de plaques, le Métrique M répond à la relation suivante :

[Math 3]

$$M = \int_{x_0}^{D} \frac{y_{max} - y(x)}{y_{max}} dx$$

Où y(x) représente la variation du profil d'intensité selon la trace linéaire en fonction de sa position x.

9. Dispositif selon l'une des revendications 1 à 8, dans lequel ledit dispositif comprend en outre une source d'émission lumineuse (120) destinée à induire l'émission d'un signal de photoluminescence par un échantillon (200) susceptible de reposer sur la face avant (111) du porte-échantillon (110).

10. Dispositif selon la revendication 9, dans lequel le détecteur (130) configuré pour collecter le signal de photoluminescence.

**Patentansprüche**

1. Photolumineszenz- oder Elektrolumineszenz-Messvorrichtung (100), die Folgendes umfasst:

   - einen Probenhalter (110);
   - einen Detektor (130), der so konfiguriert ist, dass er ein Photolumineszenz- oder Elektrolumineszenzsignal erfasst, das von einer Probe (200) emittiert wird, die auf einer Vorderseite (110) des Probenhalters (110) angeordnet werden kann;
   - eine Verarbeitungseinheit (140), die so konfiguriert ist, dass sie ein vom Detektor (130) erfasstes Signal verarbeitet
   wobei die Vorrichtung ferner einen Träger (160) umfasst, der gegenüber einer der Vorderseite (110) gegenüberliegenden Rückseite (112) des Probenhalters (110) angeordnet ist und auf dessen einer Seite, der sogenannten Hauptseite (161), mindestens eine Strahlungsquelle (150) aufliegt, die dazu bestimmt ist, eine Lichtstrahlung zu emittieren, die die Rückseite (112) beleuchtet und durch Transparenz des Probenhalters (110) gegenüber der Lichtstrahlung vom Detektor (130) erfasst werden kann,
   **dadurch gekennzeichnet, dass**, wenn eine Probe (200) mit einer Konturprobe C mit einer ersten Seite auf der Vorderseite (110) des Probenhalters (110) aufliegt, so dass die Probe (200) von einem Überlaufbereich des Probenhalters (110) umgeben ist, der von einer Lichtstrahlung durchquert werden kann, die von der mindestens einen Strahlungsquelle (150) emittiert werden kann, der Detektor (130) ebenfalls so konfiguriert ist, dass er eine Abbildung der Lichtintensität der Strahlung, die den Überlaufbereich durchqueren kann, und des von der Probe (200) emittierten Photolumineszenzsignals erstellt.

2. Vorrichtung nach Anspruch 1, wobei die mindestens eine Strahlungsquelle (150) eine Vielzahl von Strahlungsquellen umfasst, die matrixförmig auf der Hauptseite angeordnet sind.

3. Vorrichtung nach Anspruch 2, wobei die Vorrichtung ferner einen Diffusor (180) umfasst, der zwischen dem Probenhalter (110) und dem Träger eingesetzt und so konfiguriert ist, dass die von den Strahlungsquellen emittierte Lichtstrahlung homogenisiert wird.

4. Vorrichtung nach Anspruch 3, wobei der Probenhalter (110), der Diffusor (180) und der Träger durch Haltemittel fest miteinander verbunden gehalten werden.

5. Vorrichtung nach Anspruch 3 oder 4, wobei die Vorrichtung mindestens einen Filter umfasst, der so konfiguriert ist, dass er die Lichtstrahlung, die von den Strahlungsquellen emittiert werden kann, in Wellenlänge filtert.

6. Vorrichtung nach einem der Ansprüche 1 bis 5, wobei die Verarbeitungseinheit (140) ein Computerprogramm umfasst, das dazu ausgelegt ist, die folgenden Schritte durchzuführen:

   a) einen Schritt des Extrahierens eines Lichtintensitätsprofils entlang einer linearen Spur, die die Kontur der Probe (200) überlappt, wobei das Profil einen ersten Abschnitt, der der Intensität der Lichtstrahlung zugeordnet ist, die den Überlaufbereich durchquert, und einen zweiten Abschnitt umfasst, der der Intensität der Photolumineszenz der von der Probe (200) emittierten Elektrolumineszenz zugeordnet ist;

b) einen Schritt des Bestimmens der Position $x_0$, die mit einer Intensität $y_0$ des Signals verbunden ist und von einer Referenzposition des ersten Abschnitts aus ermittelt wird, der Kontur auf dem Lichtintensitätsprofil, wobei der Schritt des Lokalisierens eine Steigungsberechnung umfasst, wobei die Position $x_0$ einer Position entspricht, bei der in einer Richtung vom ersten Abschnitt zum zweiten Abschnitt eine Steigungsunterbrechung beobachtet wird, die im Absolutwert größer ist als ein vorbestimmter Wert, wobei der vorbestimmte Wert vorteilhafterweise größer als 10 % ist.

7.  Vorrichtung nach Anspruch 6, wobei das Computerprogramm auch dazu ausgelegt ist, die folgenden Schritte durchzuführen:

c) einen Schritt des Bestimmens einer Referenzintensität $y_{max}$ im zweiten Abschnitt S2, wobei die Referenzintensität $y_{max}$ einem gleitenden Maximum entspricht;

d) einen Schritt des Bestimmens eines ersten Ausmaßes $E_1$ nach einem sogenannten Tangentenverfahren, wobei das Tangentenverfahren die folgenden Unterschritte umfasst:

d1) das Berechnen der Steigung $P_0$ einer Geraden $D_0$, die durch den Koordinatenpunkt $x_0$ und $y_0$ und durch einen anderen Punkt am Rand der Probe (200) auf der linearen Spur verläuft;

d2) das Berechnen einer Position, der sogenannten Zielposition $x_c$, für die die Gerade $D_0$ eine Ordinate aufweist, die 70 % der Abweichung zwischen der Referenzintensität $y_{max}$ und der Intensität $y_0$ entspricht;

d3) das Berechnen einer Abweichung zwischen der Zielposition $x_c$ und der Position $x_0$, wobei die Abweichung mit dem ersten Ausmaß $E_1$ verbunden ist;

e) einen Schritt des Bestimmens eines zweiten Ausmaßes $E_2$ gemäß einem sogenannten direkten Verfahren, wobei das direkte Verfahren die folgenden Unterschritte umfasst:

e1) das Bestimmen einer Position, der sogenannten direkten Position $x_d$, bei der die Intensität im zweiten Abschnitt S2 70 % der Abweichung zwischen der Referenzintensität $y_{max}$ und der Intensität $y_0$ entspricht,

e2) das Berechnen einer Abweichung zwischen der direkten Position $x_d$ und der Position $x_0$, wobei die Abweichung mit dem zweiten Ausmaß $E_2$ verbunden ist.

f) das Berechnen einer Breite D des Rands, die dann als Mindestwert zwischen dem ersten Ausmaß $E_1$ und dem zweiten Ausmaß $E_2$ definiert ist.

8.  Vorrichtung nach Anspruch 7, wobei das Computerprogramm auch dazu ausgelegt ist, eine Metrik M zu berechnen, die die Menge der an den Plattenrändern vorhandenen Fehler darstellt, wobei die Metrik M die folgende Beziehung erfüllt:

[Math 3]

$$M = \int_{x_0}^{D} \frac{y_{max.} - y(x)}{y_{max.}} dx$$

wobei y(x) die Änderung des Intensitätsprofils entlang der linearen Spur in Abhängigkeit von ihrer Position x darstellt.

9.  Vorrichtung nach einem der Ansprüche 1 bis 8, wobei die Vorrichtung ferner eine Lichtemissionsquelle (120) umfasst, die dazu bestimmt ist, die Emission eines Photolumineszenzsignals durch eine Probe (200) zu erzeugen, die auf der Vorderseite (111) des Probenhalters (110) aufliegen kann.

10. Vorrichtung nach Anspruch 9, wobei der Detektor (130) so konfiguriert ist, dass er das Photolumineszenzsignal erfasst.

**Claims**

1.  A photoluminescence or electroluminescence measurement device (100) which comprises:

- a sample holder (110);
- a detector (130) configured to collect a photoluminescence or electroluminescence signal emitted by a sample (200) likely to be disposed on a front face (110) of the sample holder (110);
- a processing unit (140) configured to process a signal collected by the detector (130);

the device further comprising a support (160) disposed facing a rear face (112) of the sample holder (110), opposite to the front face (110), and on one face, called the main face (161), of which at least one radiation source (150) for emitting light radiation illuminating the rear face (112) and likely to be collected rests, by transparency of the sample holder (110) with respect to said light radiation, by the detector (130),

**characterized in that**, when a sample (200) having a contour C rests through a first face on the front face (110) of the sample holder (110), and so that said sample (200) is circumscribed by an overflow zone of the sample holder (110) through which light radiation likely to be emitted by the at least one radiation source (150) is likely to pass, said detector (130) is also configured to establish mapping of the light intensity of the radiation likely to pass through the overflow zone and of the photoluminescence signal emitted by the sample (200).

2. The device according to claim 1, wherein the at least one radiation source (150) comprises a plurality of radiation sources arranged in a matrix form on the main face.

3. The device according to claim 2, wherein said device further comprises a diffuser (180) interposed between the sample holder (110) and the support, and configured to homogenize light radiation likely to be emitted by the radiation sources.

4. The device according to claim 3, wherein the sample holder (110), the diffuser (180) and the support are held integral with each other by holding means.

5. The device according to claim 3 or 4, wherein said device comprises at least one filter configured to filter in wavelength light radiation likely to be emitted by the radiation sources.

6. The device according to one of claims 1 to 5, wherein the processing unit (140) comprises a computer program designed to implement the following steps:

a) a step of extracting a light intensity profile along a linear trace overlapping the contour of the sample (200), said profile comprising a first section associated with the intensity of the light radiation passing through the overflow zone, and a second section associated with the intensity of the photoluminescence of the electroluminescence emitted by the sample (200);

b) a step of determining the position $x_o$, associated with an intensity $y_o$ of the signal, and tracked from a reference position of the first section, of the contour on the light intensity profile, said locating step comprising a slope calculation, the position $x_o$ corresponding to a position for which a break of slope greater in absolute value than a predetermined value is observed in a direction from the first section to the second section, said predetermined value advantageously being greater than 10%.

7. The device according to claim 6, wherein the computer program is further designed to implement the following steps:

c) a step of determining a reference intensity $y_{max}$ in the second section S2, said reference intensity $y_{max}$ corresponding to a sliding maximum;

d) a step of determining a first extent $E_1$ according to a so-called tangent method, said tangent method comprises the following substeps:

d1) calculating the slope $P_o$ of a straight line $D_o$ passing through the point of coordinates $x_o$ and $y_o$ and through another point of the edge of the sample (200) taken on the linear trace;

d2) calculating a position, called target position $x_c$, for which the straight line $D_o$ has an ordinate equal to 70% of the deviation between the reference intensity $y_{max}$ and the intensity $y_o$;

d3) calculating a deviation between the target position $x_c$ and the position $x_o$, said deviation being associated with the first extent $E_1$;

e) a step of determining a second extent $E_2$ according to a so-called direct method, said direct method comprises the following substeps:

e1) determining a position, called direct position $x_d$, for which the intensity, in the second section S2, is equal to 70% of the deviation between the reference intensity $y_{max}$ and the intensity $y_o$,

e2) calculating a deviation between the direct position $x_d$ and the position $x_o$, said deviation being associated with the second extent $E_2$.

f) calculating an edge width D so defined as the minimum value between the first extent $E_1$ and the second extent $E_2$.

8. The device according to claim 7, wherein the computer program is also designed to calculate a metric M representative of the amount of defects present at the edge of plates, the Metric M satisfies the following relationship:

[Math 3]

$$M = \int_{x_0}^{D} \frac{y_{max} - y(x)}{y_{max}} \, dx$$

Where y(x) represents the variation in the intensity profile along the linear trace as a function of its position x.

9. The device according to one of claims 1 to 8, wherein said device further comprises a light emission source (120) for inducing emission of a photoluminescence signal by a sample (200) likely to rest on the front face (111) of the sample holder (110).

10. The device according to claim 9, wherein the detector (130) is configured to collect the photoluminescence signal.

FIG.1

FIG.2

FIG.3

FIG.4

FIG.5

FIG.6

FIG.7a

FIG.7b

FIG.7c

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3073944
- WO 2019117228 A1
- US 8269830 B1

**Littérature non-brevet citée dans la description**

- **P. WÜRFEL** ; **S. FINKBEINER** ; **E. DAUB**. Generalized Planck's radiation law for luminescence via indirect transitions. *Appl. Phys. A Mater. Sci. Process.*, January 1995, vol. 60 (1), 67-70
- **T. TRUPKE** ; **R. A. BARDOS** ; **M. C. SCHUBERT** ; **W. WARTA**. Photoluminescence imaging of silicon wafers. *Appl. Phys. Lett.*, July 2006, vol. 89 (4), 44107